Europäisches Patentamt

European Patent Office

Office européen des brevets

(19)

(11) **EP 1 203 145 B1**

(12) **EUROPÄISCHE PATENTSCHRIFT**

(45) Veröffentlichungstag und Bekanntmachung des Hinweises auf die Patenterteilung:
**03.11.2004 Patentblatt 2004/45**

(51) Int Cl.⁷: **F02D 41/40**, F02D 35/02

(21) Anmeldenummer: **00952931.4**

(86) Internationale Anmeldenummer:
**PCT/DE2000/002288**

(22) Anmeldetag: **13.07.2000**

(87) Internationale Veröffentlichungsnummer:
**WO 2001/009500 (08.02.2001 Gazette 2001/06)**

(54) **VERFAHREN ZUM BETREIBEN EINER BRENNKRAFTMASCHINE**

METHOD FOR THE OPERATION OF A COMBUSTION ENGINE

PROCEDE POUR FAIRE FONCTIONNER UN MOTEUR A COMBUSTION INTERNE

(84) Benannte Vertragsstaaten:
**DE ES IT**

(30) Priorität: **31.07.1999 DE 19936201**

(43) Veröffentlichungstag der Anmeldung:
**08.05.2002 Patentblatt 2002/19**

(73) Patentinhaber: **ROBERT BOSCH GMBH**
**70442 Stuttgart (DE)**

(72) Erfinder:
• **FRANKE, Steffen**
**Brentwood, Essex CM14 5BT (GB)**
• **BAEUERLE, Michael**
**D-71706 Markgroeningen (DE)**

(56) Entgegenhaltungen:
**EP-A- 0 849 459        EP-A- 0 900 928**
**DE-A- 3 022 993        US-A- 4 621 599**
**US-A- 5 163 405**

• **PATENT ABSTRACTS OF JAPAN vol. 016, no. 507 (M-1327), 20. Oktober 1992 (1992-10-20) & JP 04 187851 A (TOYOTA MOTOR CORP), 6. Juli 1992 (1992-07-06)**

EP 1 203 145 B1

## Beschreibung

Stand der Technik

Die Erfindung betrifft Verfahren zum Betreiben einer Brennkraftmaschine insbesondere eines Kraftfahrzeugs nach dem Oberbegriff des Anspruchs 1 oder des Anspruchs 2. Ebenfalls betrifft die Erfindung ein entsprechendes Steuergerät für eine Brennkraftmaschine insbesondere eines Kraftfahrzeugs.

Ein derartiges Verfahren und ein derartiges Steuergerät sind beispielsweise aus der US-A-4,621,599 bekannt.

Bei einer sogenannten Benzin-Direkteinspritzung wird der Kraftstoff in einem Homogenbetrieb während der Ansaugphase oder in einem Schichtbetrieb während der Verdichtungsphase in den Brennraum der Brennkraftmaschine eingespritzt. Der Homogenbetrieb ist vorzugsweise für den Vollastbetrieb der Brennkraftmaschine vorgesehen, während der Schichtbetrieb für den Leerlauf- und Teillastbetrieb geeignet ist. Beispielsweise in Abhängigkeit von dem angeforderten Drehmoment wird bei einer derartigen direkteinspritzenden Brennkraftmaschine zwischen den genannten Betriebsarten umgeschaltet.

Bei einer Doppeleinspritzung wird Kraftstoff während der Ansaugphase und während der Verdichtungsphase in den Brennraum eingespritzt. Mit dieser Kombination des Homogenbetriebs und des Schichtbetriebs kann eine Verminderung der Klopfempfindlichkeit der Brennkraftmaschine erreicht werden.

Eine weitere Reduktion der Klopfempfindlichkeit kann durch eine Spätverstellung des Zündwinkels für die Entzündung der Zündkerze erreicht werden. Dies stellt jedoch eine Vernichtung von Drehmoment dar, was gleichbedeutend ist mit einer Verschlechterung des Wirkungsgrads.

Aufgabe der Erfindung ist es, ein Verfahren zum Betreiben einer Brennkraftmaschine zu schaffen, mit dem die Klopfempfindlichkeit der Brennkraftmaschine weiter reduziert werden kann, ohne den Wirkungsgrad derselben wesentlich zu vermindern.

Diese Aufgabe wird bei Verfahren der eingangs genannten Art erfindungsgemäß durch die Merkmale des kennzeichnenden Teils des Anspruchs 1 oder des Anspruchs 2 gelöst. Bei einem Steuergerät der eingangs genannten Art wird die Aufgabe entsprechend gelöst.

Durch die Verminderung der während der Ansaugphase eingespritzten Kraftstoffmasse wird erreicht, dass das im Homogenbetrieb eingespritzte Luft/Kraftstoff-Gemisch magerer wird. Ein derart magerer werdender Homogenbetrieb bringt den Vorteil mit sich, dass die Klopfempfindlichkeit der Brennkraftmaschine zurückgeht. Die Brennkraftmaschine wird somit klopfunempfindlicher. Es ist damit nicht erforderlich, den Zündwinkel nach spät zu verstellen, um ein Klopfen der Brennkraftmaschine zu vermeiden. Es wird damit kein Drehmoment vernichtet, so dass auch keine Verminderung des Wirkungsgrads vorhanden ist.

Erfindungsgemäß wird die Masse des während der Verdichtungsphase eingespritzten Kraftstoffs in gleicher Weise erhöht wie die Masse des während der Ansaugphase eingespritzten Kraftstoffs reduziert wird. Damit wird insgesamt die eingespritzte Kraftstoffmasse im Wesentlichen konstant gehalten. Das von der Brennkraftmaschine erzeugte Drehmoment bleibt damit im Wesentlichen gleich, die Klopfempfindlichkeit derselben wird jedoch - wie bereits erwähnt - reduziert.

Bei einer vorteilhaften Ausgestaltung der Erfindung wird in der dritten Betriebsart Kraftstoff nach der Entzündung durch die Zündkerze direkt von dem Einspritzventil in den Brennraum eingespritzt. Insgesamt wird somit eine Dreifacheinspritzung durchgeführt. Auf diese Weise kann der einzuspritzende Kraftstoff noch besser auf die verschiedenen einzelnen Einspritzungen verteilt werden.

Bei einer vorteilhaften Weiterbildung der Erfindung wird die Masse des nach der Entzündung eingespritzten Kraftstoffs in gleicher Weise erhöht, wie die Masse des während der Ansaugphase eingespritzten Kraftstoffs reduziert wird. Damit wird insgesamt wieder die eingespritzte Kraftstoffmasse im Wesentlichen konstant gehalten. Die während der Verdichtungsphase eingespritzte Kraftstoffmasse muss dabei im Wesentlichen nicht verändert werden.

Besonders vorteilhaft ist es, wenn die Masse des während der Verdichtungsphase eingespritzten Kraftstoffs auf einem Wert beibehalten wird, der kleiner ist als eine vorgebbare oder applizierbare Grenze. Damit kann die während der Verdichtungsphase eingespritzte Kraftstoffmasse unter demjenigen Wert gehalten werden, der eine Verbrennung unterhalb der Rußgrenze gewährleistet. Gleichzeitig kann jedoch eine Reduktion der während der Ansaugphase eingespritzten Kraftstoffmasse durch eine Erhöhung der nach der Entzündung eingespritzten Kraftstoffmasse ausgeglichen werden. Insgesamt wird damit im Wesentlichen dieselbe Kraftstoffmasse in den Brennraum eingespritzt, wobei jedoch einerseits die Klopfempfindlichkeit der Brennkraftmaschine durch eine Reduktion der während der Ansaugphase eingespritzten Kraftstoffmasse vermindert wird, ohne dabei jedoch die Rußgrenze der während der Verdichtungsphase eingespritzten Kraftstoffmasse zu überschreiten.

Von besonderer Bedeutung ist die Realisierung des erfindungsgemäßen Verfahrens in der Form eines Steuerelements, das für ein Steuergerät einer Brennkraftmaschine, insbesondere eines Kraftfahrzeugs, vorgesehen ist. Dabei ist auf dem Steuerelement ein Programm abgespeichert, das auf einem Rechengerät, insbesondere auf einem Mikroprozessor, ablauffähig und zur Ausführung des erfindungsgemäßen Verfahrens geeignet ist. Als Steuerelement kann insbesondere ein elektrisches Speichermedium zur Anwendung kommen, beispielsweise ein Read-Only-Memory oder ein Flash-Memory.

Weitere bevorzugte Merkmale, Anwendungsmöglichkeiten und Vorteile der Erfindung ergeben sich aus der nachfolgenden Beschreibung von Ausführungsbeispielen der Erfindung, die den Figuren der Zeichnung dargestellt sind.

Figur 1    zeigt eine schematische Darstellung eines Ausführungsbeispiels einer erfindungsgemäßen Brennkraftmaschine,

Figur 2    zeigt ein schematisches Zeitdiagramm eines ersten Ausführungsbeispiels eines erfindungsgemäßen Verfahrens zum Betreiben der Brennkraftmaschine der Figur 1,

Figur 3    zeigt ein schematisches Zeitdiagramm eines zweiten Ausführungsbeispiels eines erfindungsgemäßen Verfahrens zum Betreiben der Brennkraftmaschine der Figur 1, und

Figur 4    zeigt ein schematisches Ablaufdiagramm eines Ausführungsbeispiels zur Durchführung des Verfahrens nach der Figur 3.

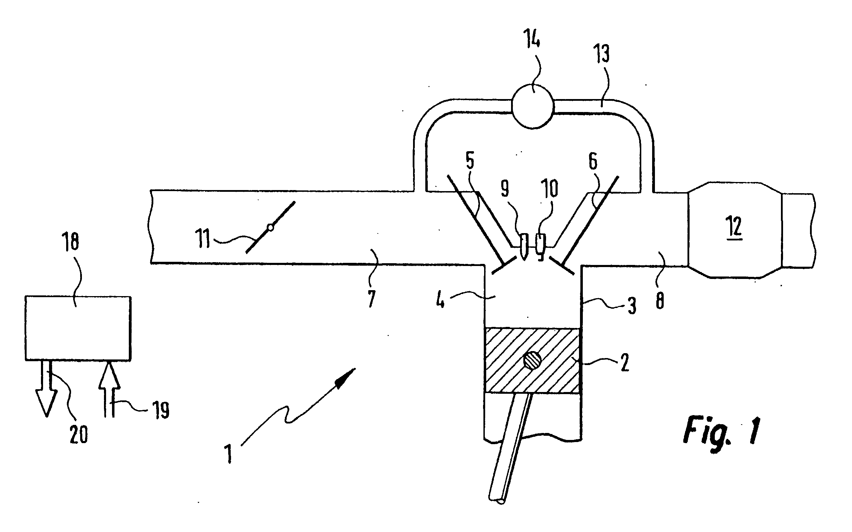

In der Figur 1 ist eine Brennkraftmaschine 1 eines Kraftfahrzeugs dargestellt, bei der ein Kolben 2 in einem Zylinder 3 hin- und herbewegbar ist. Der Zylinder 3 ist mit einem Brennraum 4 versehen, der unter anderem durch den Kolben 2, ein Einlaßventil 5 und ein Auslaßventil 6 begrenzt ist. Mit dem Einlaßventil 5 ist ein Ansaugrohr 7 und mit dem Auslaßventil 6 ist ein Abgasrohr 8 gekoppelt.

Im Bereich des Einlaßventils 5 und des Auslaßventils 6 ragen ein Einspritzventil 9 und eine Zündkerze 10 in den Brennraum 4. Über das Einspritzventil 9 kann Kraftstoff in den Brennraum 4 eingespritzt werden. Mit der Zündkerze 10 kann der Kraftstoff in dem Brennraum 4 in einem vorgegebenen Zündzeitpunkt bzw. Zündwinkel entzündet werden.

In dem Ansaugrohr 7 ist eine drehbare Drosselklappe 11 untergebracht, über die dem Ansaugrohr 7 Luft zuführbar ist. Die Menge der zugeführten Luft ist abhängig von der Winkelstellung der Drosselklappe 11. In dem Abgasrohr 8 ist ein Katalysator 12 untergebracht, der der Reinigung der durch die Verbrennung des Kraftstoffs entstehenden Abgase dient.

Der Kolben 2 wird durch die Verbrennung des Kraftstoffs in dem Brennraum 4 in eine Hin- und Herbewegung versetzt, die auf eine nicht-dargestellte Kurbelwelle übertragen wird und auf diese ein Drehmoment ausübt.

Ein Abgasrückführrohr 13 verbindet das Abgasrohr 8 und das Ansaugrohr 7. In dem Abgasrückführrohr 13 ist ein Abgasrückführventil 14 untergebracht. Insgesamt wird auf diese Weise eine Abgasrückführung realisiert.

Ein Steuergerät 18 ist von Eingangssignalen 19 beaufschlagt, die mittels Sensoren gemessene Betriebsgrößen der Brennkraftmaschine 1 darstellen. Beispielsweise ist das Steuergerät 18 mit einem Luftmassensensor, einem Lambda-Sensor, einem Drehzahlsensor und dergleichen verbunden. Des weiteren ist das Steuergerät 18 mit einem Fahrpedalsensor verbunden, der ein Signal erzeugt, das die Stellung eines von einem Fahrer betätigbaren Fahrpedals und damit das angeforderte Drehmoment angibt. Das Steuergerät 18 erzeugt Ausgangssignale 20, mit denen über Aktoren bzw. Steller das Verhalten der Brennkraftmaschine 1 beeinflußt werden kann. Beispielsweise ist das Steuergerät 18 mit dem Einspritzventil 9, der Zündkerze 10 und der Drosselklappe 11 und dergleichen verbunden und erzeugt die zu deren Ansteuerung erforderlichen Signale.

Unter anderem ist das Steuergerät 18 dazu vorgesehen, die Betriebsgrößen der Brennkraftmaschine 1 zu steuern und/oder zu regeln. Beispielsweise wird die von dem Einspritzventil 9 in den Brennraum 4 eingespritzte Kraftstoffmasse von dem Steuergerät 18 insbesondere im Hinblick auf einen geringen Kraftstoffverbrauch und/oder eine geringe Schadstoffentwicklung gesteuert und/oder geregelt. Zu diesem Zweck ist das Steuergerät 18 mit einem Mikroprozessor versehen, der in einem Speichermedium, insbesondere in einem Flash-Memory ein Programm abgespeichert hat, das dazu geeignet ist, die genannte Steuerung und/oder Regelung durchzuführen.

In einer ersten Betriebsart, einem sogenannten Homogenbetrieb der Brennkraftmaschine 1, wird die Drosselklappe 11 in Abhängigkeit von dem erwünschten Drehmoment teilweise geöffnet bzw. geschlossen. Der Kraftstoff wird von dem Einspritzventil 9 während einer durch den Kolben 2 hervorgerufenen Ansaugphase in den Brennraum 4 eingespritzt. Durch die gleichzeitig über die Drosselklappe 11 angesaugte Luft wird der eingespritzte Kraftstoff verwirbelt und damit in dem Brennraum 4 im wesentlichen gleichmäßig verteilt. Danach wird das Kraftstoff/Luft-Gemisch während der Verdichtungsphase verdichtet, um dann von der Zündkerze 10 entzündet zu werden. Durch die Ausdehnung des entzündeten Kraftstoffs wird der Kolben 2 angetrieben. Das entstehende Drehmoment hängt im Homogenbetrieb unter anderem von der Stellung der Drosselklappe 11 ab. Im Hinblick auf eine geringe Schadstoffentwicklung wird das Kraftstoff/Luft-Gemisch möglichst auf Lambda gleich Eins oder in Verbindung mit der Abgasrückführung auf ein Lambda etwas größer als Eins eingestellt.

In einer zweiten Betriebsart, einem sogenannten Schichtbetrieb der Brennkraftmaschine 1, wird die Drosselklappe 11 weit geöffnet. Der Kraftstoff wird von dem Einspritzventil 9 während einer durch den Kolben 2 hervorgerufenen Verdichtungsphase in den Brennraum 4 eingespritzt, und zwar örtlich in die unmittelbare Umgebung der Zündkerze 10 sowie zeitlich in geeignetem Abstand vor dem Zündzeitpunkt. Dann wird mit Hilfe der Zündkerze 10 der Kraftstoff entzündet, so daß der Kolben 2 in der nunmehr folgenden Arbeitsphase durch die Ausdehnung des entzündeten Kraftstoffs angetrieben wird. Das entstehende Drehmoment hängt im Schichtbetrieb weitgehend von der eingespritzten Kraftstoffmasse ab. Im wesentlichen ist der Schichtbetrieb für den Leerlaufbetrieb und den Teillastbetrieb der Brennkraftmaschine 1 vorgesehen.

Bei einer dritten Betriebsart wird eine Doppeleinspritzung durchgeführt. Dies stellt eine Kombination des Homogenbetriebs und des Schichtbetriebs dar. Es wird also Kraftstoff in einer ersten Einspritzung während der Ansaugphase und in einer zweiten Einspritzung während der Verdichtungsphase in den Brennraum 4 der Brennkraftmaschine 1 eingespritzt. Diese dritte Betriebsart dient unter anderem dazu, die Klopfempfindlichkeit der Brennkraftmaschine 1 zu vermindern. Die dritte Betriebsart kann insbesondere mit der Abgasrückführung kombiniert werden, um Stockoxid-Emissionen zu reduzieren.

Die Klopfempfindlichkeit der Brennkraftmaschine 1 ist umso geringer, je magerer das Luft/Kraftstoff-Gemisch in einem sogenannten Endgasbereich des Brennraums 4 ist. Bei dem Endgasbereich handelt es sich um denjenigen Bereich der gesamten, in dem Brennraum 4 befindlichen Ladung, der nach der Zündung der Zündkerze 10 noch nicht entzündet worden ist.

Im vorliegenden Fall wird von der Zündkerze 10 im Wesentlichen der während der Verdichtungsphase eingespritzte Kraftstoff entzündet, der als Wolke unmittelbar im Bereich der Zündkerze 10 vorhanden ist. Erst danach entzündet sich auch außerhalb der Wolke der während der Ansaugphase eingespritzte Kraftstoff. Vor dessen Entzündung stellt dieser homogen in dem Brennraum 4 verteilte Kraftstoff jedoch den vorgenannten Endgasbereich dar.

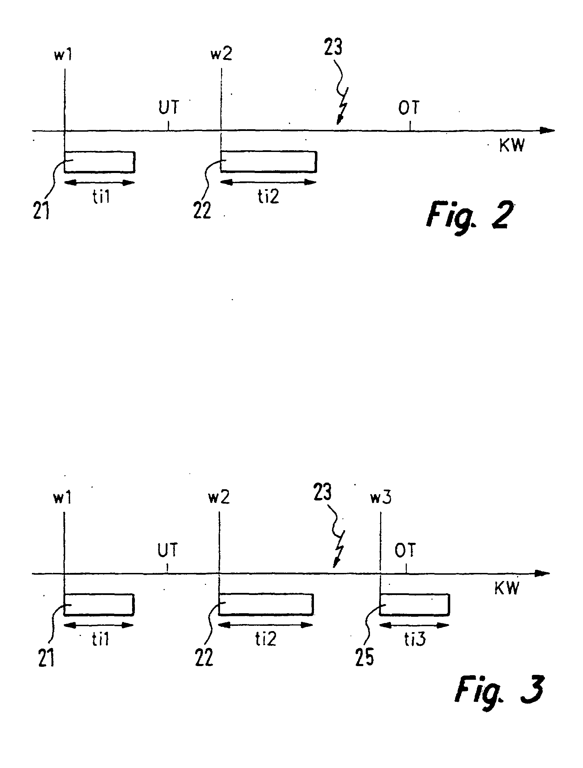

In der Figur 2 ist eine Doppeleinspritzung entsprechend der dritten Betriebsart dargestellt. Dabei sind über dem Kurbelwellenwinkel KW und damit über der Zeit zwei Einspritzungen 21, 22 aufgetragen, die die Einspritzdauern ti1 und ti2 und die Einspritzbeginnwinkel w1 und w2 aufweisen. Der untere Totpunkt ist mit "UT" und der obere Totpunkt der Brennkraftmaschine 1 ist mit "OT" gekennzeichnet. Bei dem Pfeil 23 wird die Zündkerze 10 gezündet.

Die erste Einspritzung 21 erfolgt vor dem unteren Totpunkt UT und damit während der Ansaugphase im Homogenbetrieb. Die zweite Einspritzung 22 erfolgt nach dem unteren Totpunkt UT, aber vor dem oberen Totpunkt OT, also während der Verdichtungsphase und damit im Schichtbetrieb.

Die gesamte, in den Brennraum 4 eingespritzte Kraftstoffmenge bzw. -masse entspricht der gesamten Einspritzdauer tiges, die sich aus den beiden Einspritzdauern ti1 und ti2 gemäß tiges = ti1 + ti2 zusammensetzt, und die in Abhängigkeit von den Betriebsgrößen der Brennkraftmaschine 1 durch das Steuergerät 18 ermittelt wird.

Wird von dem Steuergerät 18 beispielsweise mittels eines Klopfsensors oder auf sonstige Art und Weise ein Klopfen der Brennkraftmaschine 1 festgestellt, das z.B. durch die Verwendung eines Krafstoffs mit kleiner Oktanzahl entstehen kann, so werden von dem Steuergerät 18 die Einspritzdauern ti1 und ti2 wie folgt verändert:

$$ti1(neu) = ti1 \,(alt) - dti$$

$$ti2(neu) = ti2(alt) + dti.$$

Bei der Zeitdauer dti handelt es sich um eine Zeitdauer, die kleiner ist als die Einspritzdauern ti1 und ti2 und die von dem Steuergerät 18 fest vorgegeben oder in Abhängigkeit von Betriebsgrößen der Brennkraftmaschine 1 ermittelt werden kann.

Die gesamte Einspritzdauer tiges bleibt damit konstant, also tiges(neu) = tiges(alt). Bei der ersten Einspritzung wird jedoch weniger und bei der zweiten Einspritzung mehr Kraftstoff eingespritzt. Dies hat zur Folge, daß das im Homogenbetrieb erzeugte Luft/Kraftstoff-Gemisch aufgrund der kürzeren Einspritzdauer ti1 (neu) magerer wird und die im Schichtbetrieb erzeugte geschichtete Kraftstoffwolke aufgrund der längeren Einspritzdauer ti2(neu) fetter wird.

Aufgrund der magerer werdenden ersten Einspritzung wird auch das Luft/Kraftstoff-Gemisch in dem Endgasbereich des Brennraums 4 magerer. Damit sinkt die Klopfempfindlichkeit der Brennkraftmaschine 1.

Es ist jedoch möglich, daß aufgrund der fetter werdenden zweiten Einspritzung die daraus resultierende geschichtete Kraftstoffwolke derart fett wird, daß bei der Verbrennung dieses Kraftstoffs eine vorgegebene Grenze, beispielsweise eine Rußgrenze überschritten wird.

In der Figur 3 ist eine Abwandlung der Doppeleinspritzung der Figur 2 dargestellt, nämlich eine Dreifacheinspritzung. Dabei sind über dem Kurbelwellenwinkel KW und damit über der Zeit drei Einspritzungen 21, 22, 25 aufgetragen, die die Einspritzdauern ti1, ti2 und ti3 und die Einspritzbeginnwinkel w1, w2 und w3 aufweisen. Der untere Totpunkt ist mit "UT" und der obere Totpunkt der Brennkraftmaschine 1 ist mit "OT" gekennzeichnet. Bei dem Pfeil 23 wird die Zündkerze 10 gezündet.

Die erste Einspritzung 21 erfolgt vor dem unteren Totpunkt UT und damit während der Ansaugphase im Homogenbetrieb. Die zweite Einspritzung 22 erfolgt nach dem unteren Totpunkt UT, aber vor dem oberen Totpunkt OT, also während der Verdichtungsphase und damit im Schichtbetrieb. Die dritte Einspritzung 25 erfolgt nach der Entzündung durch die Zündkerze im Zeitpunkt 23, und zwar etwa in einem Zeit- bzw. Kurbelwellenwinkelbereich, während dem die Kurbelwelle den oberen Totpunkt OT durchläuft. Die dritte Einspritzung 25 erfolgt damit nach der Entzündung und damit während der laufenden Verbrennung.

Die gesamte, in den Brennraum 4 eingespritzte Kraftstoffmenge bzw. -masse entspricht der gesamten Einspritzdauer tiges, die sich aus den drei Einspritzdauern ti1, ti2 und ti3 gemäß tiges = ti1 + ti2 + ti3 zusammensetzt, und die in Abhängigkeit von den Betriebsgrößen der Brennkraftmaschine 1 durch das Steuergerät 18 ermittelt wird.

Wird von dem Steuergerät 18 beispielsweise mittels eines Klopfsensors oder auf sonstige Art und Weise ein Klopfen der Brennkraftmaschine 1 festgestellt, so werden von dem Steuergerät 18 die Einspritzdauern ti1 und ti3 wie folgt verändert:

$$ti1(neu) = ti1(alt) - dti$$

$$ti3(neu) = ti3(alt) + dti.$$

Die Einspritzdauer ti2 wird insbesondere aus Vereinfachungsgründen jedoch nicht verändert:

$$ti2 (neu) = ti2(alt).$$

Bei der Zeitdauer dti handelt es sich um eine Zeitdauer, die kleiner ist als die Einspritzdauern ti1, ti2 und ti3 und die von dem Steuergerät 18 fest vorgegeben oder in Abhängigkeit von Betriebsgrößen der Brennkraftmaschine 1 ermittelt werden kann.

Die gesamte Einspritzdauer tiges bleibt damit konstant, also tiges(neu) = tiges(alt). Bei der ersten Einspritzung wird jedoch weniger und bei der dritten Einspritzung mehr Kraftstoff eingespritzt. Die zweite Einspritzung bleibt unverändert. Dies hat zur Folge, daß das im Homogenbetrieb erzeugte Luft/Kraftstoff-Gemisch aufgrund der kürzeren Einspritzdauer ti1(neu) magerer wird, die im Schichtbetrieb erzeugte geschichtete Kraftstoffwolke bleibt unverändert, und die dritte Einspritzung wird fetter.

Aufgrund der magerer werdenden ersten Einspritzung wird auch das Luft/Kraftstoff-Gemisch in dem Endgasbereich des Brennraums 4 magerer. Damit sinkt die Klopfempfindlichkeit der Brennkraftmaschine 1.

Aufgrund der unveränderten zweiten Einspritzung wird der Schichtbetrieb nicht fetter und die daraus resultierende geschichtete Kraftstoffwolke bleibt gleich. Bei der Verbrennung dieses Kraftstoffs kann somit eine vorgegebene Rußgrenze berücksichtigt werden, ohne daß dabei die Gefahr besteht, daß diese Rußgrenze überschritten wird.

In einem Extremfall ist es möglich, die Einspritzdauer ti1 auf Null einzustellen. Dies bedeutet, daß die erste Einspritzung 21 nicht mehr vorhanden ist. Damit kann die Klopfempfindlichkeit der Brennkraftmaschine 1 weiter reduziert werden.

In einem anderen Extremfall ist es möglch, dass das Einspritzende der Einspritzung 22 gleich dem Zündzeitpunkt 23 und auch gleich dem Einspritzbeginn der Einspritzung 25 ist.

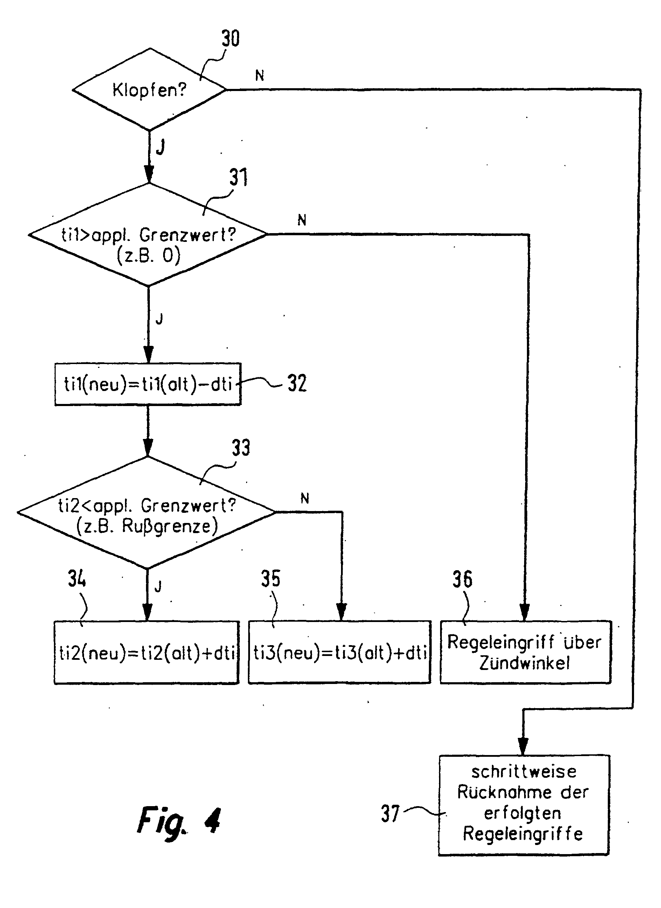

In der Figur 4 ist ein Verfahren dargestellt, mit dem die anhand der Figur 3 erläuterte Dreifacheinspritzung von dem Steuergerät 18 ausgeführt wird.

In einem Block 30 wird von dem Steuergerät 18 z.B. mittels eines Klopfsensors oder auf sonstige Art und Weise ermittelt, ob bei der Brennkraftmaschine 1 ein Klopfen vorhanden ist. In einem Block 31 wird von dem Steuergerät 18 geprüft, ob die Einspritzdauer ti1 noch größer ist als ein vorgegebener, gegebenenfalls applizierbarer Grenzwert. Im Extremfall kann dieser Grenzwert auch, wie bereits erläutert, Null sein. Ist die Einspritzdauer ti1 größer als der Grenzwert, so wird in einem Block 32 die Einspritzdauer ti1 um die Zeitdauer dti entsprechend der bereits erwähnten Gleichung ti1 (neu) = ti1(alt) - dti verkürzt.

In einem nachfolgenden Block 33 wird von dem Steuergerät 18 überprüft, ob die Einspritzdauer ti2 noch kleiner ist als ein vorgegebener, gegebenenfalls applizierbarer Grenzwert. Dieser Grenzwert kann z.B. von der bereits erwähnten Rußgrenze abhängig sein. Ist die Einspritzdauer ti2 kleiner als der Grenzwert, so wird in einem Block 34 die Einspritzdauer ti2 um die Zeitdauer dti entsprechend der bereits erwähnten Gleichung ti2(neu) = ti2(alt) + dti verlängert.

Ist die Einspritzdauer ti2 jedoch bereits größer als der genannte Grenzwert, so wird der Block 34 nicht durchgeführt und damit die Einspritzdauer ti2 nicht verlängert, sondern beibehalten. Statt dessen wird in einem Block 35 die Einspritzdauer ti3 um die Zeitdauer dti entsprechend der bereits erwähnten Gleichung ti3(neu) = ti3(alt) + dti verlängert.

Insgesamt wird auf diese Weise erreicht, daß einerseits die erste Einspritzdauer ti1 verringert und damit die Klopfempfindlichkeit der Brennkraftmaschine 1 reduziert wird, andererseits aber die Einspritzdauer ti2 nicht über den Grenzwert erhöht und damit die Rußgrenze eingehalten wird.

Wird in dem Block 31 von dem Steuergerät 18 festgestellt, daß die Einspritzdauer ti1 bereits kleiner ist als der vorgegebene Grenzwert, so kann eine weitere Verringerung der Klopfempfindlichkeit über eine Verkürzung der Einspritzdauer ti1 nicht mehr erreicht werden. In diesem Fall wird in einem Block 36 der Zündwinkel, also letztlich der Zeitpunkt 23 der Entzündung der Zündkerze 10 derart gesteuert und/oder geregelt, daß die Klopfempfindlichkeit auf diese Art verringert wird. Insbesondere wird dabei der Zündwinkel nach spät verstellt.

Wird in dem Block 30 von dem Steuergerät 18 festgestellt, daß kein Klopfen der Brennkraftmaschine 1 mehr vorliegt, so können in einem Block 37 die durchgeführten Veränderungen der Einspritzdauern ti1, ti2, ti3 schrittweise wieder zurückgenommen werden. Hierbei kann zuerst geprüft werden, ob diese Rücknahme sinnvoll ist oder ob es zweckmäßiger ist, irgendwelche Adaptionen an der Steuerung und/oder Regelung der Brennkraftmaschine 1 und/oder an dem Verfahren der Figur 4 vorzunehmen. Diese Entscheidung kann beispielsweise mit Hilfe eines Vergleichs von Wirkungsgraden der Brennkraftmaschine 1 vor und nach der durchgeführten Veränderungen der Einspritzdauern ti1, ti2, ti3 erfolgen.

**Patentansprüche**

1. Verfahren zum Betreiben einer Brennkraftmaschine (1) insbesondere eines Kraftfahrzeugs, bei dem Kraftstoff in einer ersten Betriebsart während einer Ansaugphase, in einer zweiten Betriebsart während einer Verdichtungsphase oder in einer dritten Betriebsart (Figur 2) während der Ansaug- und der Verdichtungsphase direkt von einem Einspritzventil (9) in einen Brennraum (4) eingespritzt und von einer Zündkerze (10) entzündet wird, **dadurch gekennzeichnet, dass** in der dritten Betriebsart bei einem Klopfen der Brennkraftmaschine (1) die Masse des während der Ansaugphase eingespritzten Kraftstoffs reduziert wird (32), und dass die Masse des während der Verdichtungsphase eingespritzten Kraftstoffs in gleicher Weise erhöht wird (34) wie die Masse des während der Ansaugphase eingespritzten Kraftstoffs reduziert wird (32).

2. Verfahren zum Betreiben einer Brennkraftmaschine (1) insbesondere eines Kraftfahrzeugs, bei dem Kraftstoff während einer Ansaug- und einer Verdichtungsphase direkt von einem Einspritzventil (9) in einen Brennraum (4) eingespritzt und von einer Zündkerze (10) entzündet wird, **dadurch gekennzeichnet, dass** bei einem Klopfen der Brennkraftmaschine (1) die Masse des während der Ansaugphase eingespritzten Kraftstoffs reduziert wird, und dass die Masse des während der Verdichtungsphase eingespritzten Kraftstoffs in gleicher Weise erhöht wird (34) wie die Masse des während der Ansaugphase eingespritzten Kraftstoffs reduziert wird (32).

3. Verfahren nach Anspruch 1, **dadurch gekennzeichnet, dass** in der dritten Betriebsart Kraftstoff nach der Entzündung durch die Zündkerze (10) direkt von dem Einspritzventil (9) in den Brennraum (4) eingespritzt wird (Figur 3).

4. Verfahren nach Anspruch 3, **dadurch gekennzeichnet, dass** die Masse des nach der Entzündung eingespritzten Kraftstoffs in gleicher Weise erhöht wird (35) wie die Masse des während der Ansaugphase eingespritzten Kraftstoffs reduziert wird (32).

5. Verfahren nach Anspruch 4, **dadurch gekennzeichnet, dass** die Masse des während der Verdichtungsphase eingespritzten Kraftstoffs auf einem Wert beibehalten wird (33), der kleiner ist als eine vorgebbare oder applizierbare Grenze.

6. Verfahren nach einem der vorstehenden Ansprüche, **dadurch gekennzeichnet, dass** der Zündwinkel nach spät verstellt wird (36).

7. Steuerelement, insbesondere Flash-Memory, für ein Steuergerät (18) einer Brennkraftmaschine (1) insbesondere eines Kraftfahrzeugs, **dadurch gekennzeichnet, dass** auf ihm ein Programm abgespeichert ist, das zur Anwendung bei einem Verfahren nach einem der Ansprüche 1 bis 6 programmiert ist.

8. Steuergerät (18) für eine Brennkraftmaschine (1) insbesondere eines Kraftfahrzeugs, **dadurch gekennzeichnet, dass** es zur Anwendung bei einem Verfahren nach einem der Ansprüche 1 bis 6 hergerichtet ist.

**Claims**

1. Method for operating an internal combustion engine (1), in particular of a motor vehicle, in which fuel is injected directly into a combustion chamber (4) by an injection valve (9) and ignited by a spark plug (10), in a first operating mode during an induction phase, in a second operating mode during a compression phase or in a third operating mode (Figure 2) during the induction and compression phases, **characterized in that** in the third operating mode, in the event of knocking in the internal combustion engine (1), the mass of fuel injected during the induction phase is reduced (32), and **in that** the mass of fuel injected during the compression phase is increased (34) in the same way as the mass of fuel injected during the induction phase is reduced (32).

2. Method for operating an internal combustion engine (1), in particular of a motor vehicle, in which fuel is injected directly into a combustion chamber (4) by an injection valve (9) and ignited by a spark plug (10) during an induction phase and a compression phase, **characterized in that** in the event of knocking in the internal combustion engine (1), the mass of fuel injected during the induction phase is reduced, and **in that** the mass of fuel injected during the compression phase is increased (34) in the same way as the mass of fuel injected during the induction phase is reduced (32).

3. Method according to Claim 1, **characterized in that** in the third operating mode fuel is injected directly into the combustion chamber (4) by the injection valve (9) after ignition by the spark plug (10) (Figure 3).

**4.** Method according to Claim 3, **characterized in that** the mass of fuel injected after the ignition is increased (35) in the same way as the mass of fuel injected during the induction phase is reduced (32).

**5.** Method according to Claim 4, **characterized in that** the mass of fuel injected during the compression phase is maintained (33) at a level which is lower than a predeterminable or applicable limit.

**6.** Method according to one of the preceding claims, **characterized in that** the ignition angle is shifted (36) towards a late position.

**7.** Control element, in particular flash memory, for a control unit (18) of an internal combustion engine (1), in particular of a motor vehicle, **characterized in that** a program which is programmed for use in a method according to one of Claims 1 to 6 is stored on it.

**8.** Control unit (18) for an internal combustion engine (1), in particular of a motor vehicle, **characterized in that** it is designed for use in a method according to one of Claims 1 to 6.

**Revendications**

**1.** Procédé pour faire fonctionner un moteur à combustion interne (1) en particulier d'un véhicule automobile, selon lequel, dans un premier mode de fonctionnement lors d'une phase d'aspiration, dans un deuxième mode de fonctionnement lors d'une phase de compression ou dans un troisième mode de fonctionnement (figure 2) lors de la phase d'aspiration et de compression, du carburant est directement injecté dans une chambre de combustion (4) par une soupape d'injection (9) et est allumé par une bougie (10),
**caractérisé en ce que**
la masse du carburant injecté lors de la phase d'aspiration est réduite (32) dans le troisième mode de fonctionnement lorsque le moteur à combustion interne (1) cogne et la masse du carburant injecté lors de la phase de compression est augmentée (34) de la même manière que la masse du carburant injecté lors de la phase d'aspiration est réduite (32).

**2.** Procédé pour faire fonctionner un moteur à combustion interne (1) en particulier d'un véhicule automobile, selon lequel du carburant est directement injecté par une soupape d'injection (9) dans une chambre de combustion (4) lors d'une phase d'aspiration et de compression et est allumé par une bougie (10),
**caractérisé en ce que**
la masse du carburant injecté lors de la phase d'aspiration est réduite lorsque le moteur à combustion interne (1) cogne et la masse du carburant injecté lors de la phase de compression est augmentée (34) de la même manière que la masse du carburant injecté lors de la phase d'aspiration est réduite (32).

**3.** Procédé selon la revendication 1,
**caractérisé en ce que**
dans le troisième mode de fonctionnement, du carburant est directement injecté dans une chambre de combustion (4) par la soupape d'injection (9) après l'allumage par la bougie (10).

**4.** Procédé selon la revendication 3,
**caractérisé en ce que**
la masse du carburant injecté après l'allumage est augmentée (35) de la même manière que la masse du carburant injecté lors de la phase d'aspiration est réduite (32).

**5.** Procédé selon la revendication 4,
**caractérisé en ce que**
la masse du carburant injecté pendant la phase de compression est maintenue (33) à une valeur inférieure à une limite prédéterminable ou applicable.

**6.** Procédé selon l'une des revendications précédentes,
**caractérisé en ce que**
l'angle d'allumage est modifié (36) ultérieurement.

**7.** Élément de commande, en particulier mémoire flash pour un appareil de commande (18) d'un moteur à combustion interne (1) en particulier d'un véhicule automobile,
**caractérisé en ce qu'**
il mémorise un programme programmé pour appliquer un procédé selon l'une des revendications 1 à 6.

**8.** Appareil de commande (18) pour un moteur à combustion interne (1) en particulier d'un véhicule automobile,
**caractérisé en ce qu'**
il est prévu pour appliquer un procédé selon l'une des revendications 1 à 6.

Fig. 1

Fig. 2

Fig. 3

30

Klopfen?  —N→

↓ J

31

ti1>appl. Grenzwert?
(z.B. 0)  —N→

↓ J

ti1(neu)=ti1(alt)−dti  — 32

33

ti2<appl. Grenzwert?
(z.B. Rußgrenze)  —N→

34 ↓ J

ti2(neu)=ti2(alt)+dti

35

ti3(neu)=ti3(alt)+dti

36

Regeleingriff über
Zündwinkel

37

schrittweise
Rücknahme der
erfolgten
Regeleingriffe

*Fig. 4*